# EUROPEAN PATENT APPLICATION

(11) **EP 1 361 680 A1**
(43) Date of publication of application: **12.11.2003**
(21) Application number: 02806089.5
(22) Date of filing: 27.12.2002
(51) Int. Cl.: H04B 7/10

(54) **MULTI-ANTENNA APPARATUS; MULTI-ANTENNA RECEPTION METHOD; AND MULTI-ANTENNA TRANSMISSION METHOD**

(30) Priority: 28.12.2001 JP 2001400831
(71) Applicant: MATSUSHITA ELECTRIC INDUSTRIAL CO., LTD., Kadoma-shi, Osaka 571-8501 (JP)
(72) Inventor: KANEMOTO, Hideki, Yokosuka-shi, Kanagawa 239-0847 (JP); MIYA, Kazuyuki, Asao-ku, Kawasaki-shi, Kanagawa 215-0021 (JP)
(74) Representative: Grünecker, Kinkeldey, Stockmair & Schwanhäusser Anwaltssozietät
(86) International application number: JP0213771
(87) International publication number: WO03058846

(57) **Abstract**

The present invention comprises a pair of antenna elements ANTV (111) and ANTH (112) provided apart by a predetermined distance which receive polarizations orthogonal to each other, a reception processing sections 211a, 211b and 222 that apply demodulation and combination processing to the signals received through the antenna elements, and can thereby make compatible effects of polarized diversity and effects of spatial diversity

## Description

### Technical Field

The present invention relates to a multi-antenna apparatus, multi-antenna reception method and multi-antenna transmission method.

### Background Art

In a conventional mobile communication system, with the movement of a mobile station (MS), etc . , a propagation path varies with time in a complicated manner, which produces drastic variations (hereinafter referred to as "fading") in amplitude and phase of received signals of both the base station (BS) and mobile station. As types of fading, there are Rayleigh fading whereby the amplitude and phase of a received signal change instantaneously and shadowing which shows relatively moderate variations behind a building or caused by topographical obstacles, etc.

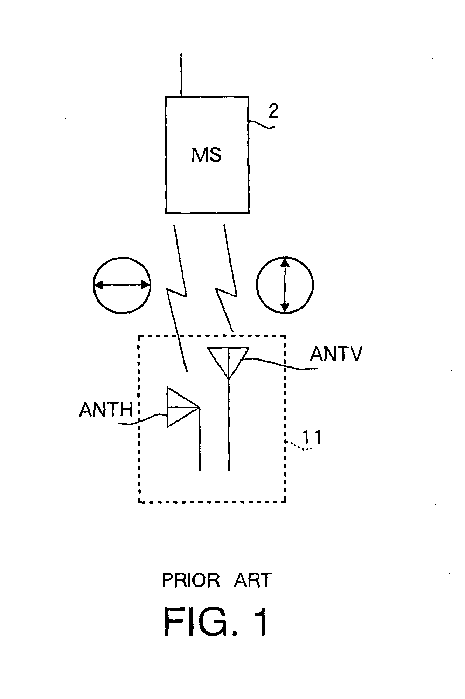

One of measures for reducing influences of such fading is a diversity reception method using two or more received signals. An example of the diversity antenna apparatus using this reception method is a polarized diversity antenna apparatus 11 shown in FIG.1 which receives horizontal polarization and vertical polarization using two antennas (branches) ANTH and ANTV for horizontal polarization and vertical polarization respectively.

When a reception level of one branch is low, this polarized diversity antenna apparatus selects another branch or combines these received signals to reduce the probability that reception quality will deteriorate due to Rayleigh fading.

Especially, in places like a city and a mountain area where diffused reflections are liable to occur in radio waves, even if a radio wave is received at the same position, the intensity of the signal may change drastically depending on the plane of polarization and the use of a polarized diversity antenna apparatus can effectively avoid deterioration of the reception quality.

On the other hand, there is a mobile communication system that adopts a sector configuration using a directional antenna whereby a communication range (cell) covered by a base station is restricted angles. This mobile communication system suppresses interference potential against other cells, reduces interference potential from other cells and thereby increases the system capacity and improves the overall frequency utilization efficiency.

There is a mobile communication system using this sector configuration which provides a plurality of transmission/reception antennas in each sector, forms an adaptive array antenna (AAA) using the plurality of antennas, controls directivity using the adaptive array antenna and thereby improves the transmission/reception characteristic.

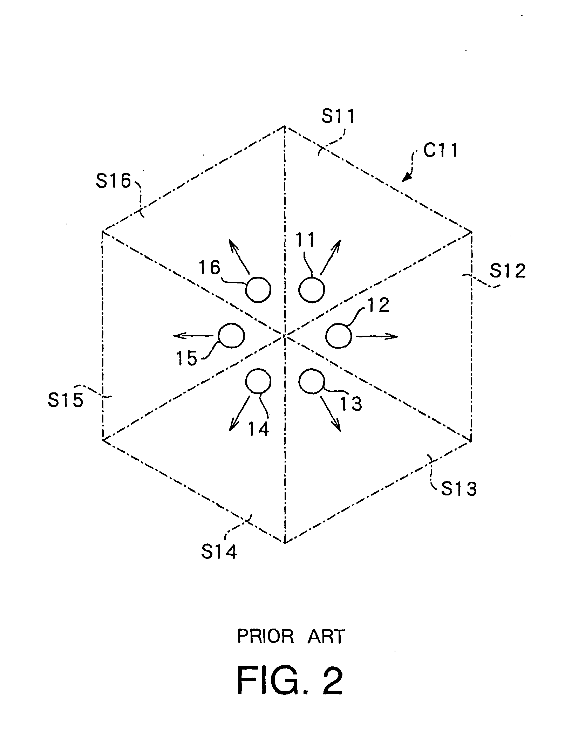

As an antenna making up this adaptive array antenna, a mobile communication system using a plurality of polarized diversity antenna apparatuses is considered (Institute of Electronics, Information and Communication Engineers, Wireless Communication Subcommittee Technical Report RCS2001-36 "Coherent Multistage Interference Canceller Using Multiple Antennas Reception Coupled with Space/Polarization Diversity Techniques in DS-CDMA Reverse Link"). FIG.2 illustrates an arrangement of adaptive array antennas 11 to 16 in a case where adaptive array antennas 11, 12, 13, 14, 15 and 16 each made up of a plurality of polarized diversity antenna apparatuses are arranged for their respective sectors S11, S12, S13, S14, S15 and S16 of a cell C11 forming an adaptive array antenna at a base station.

In this FIG.2, the respective adaptive array antennas 11 to 16 are designed to control directivity for their respective sectors S11 to S16 to thereby improve the transmission/reception characteristic.

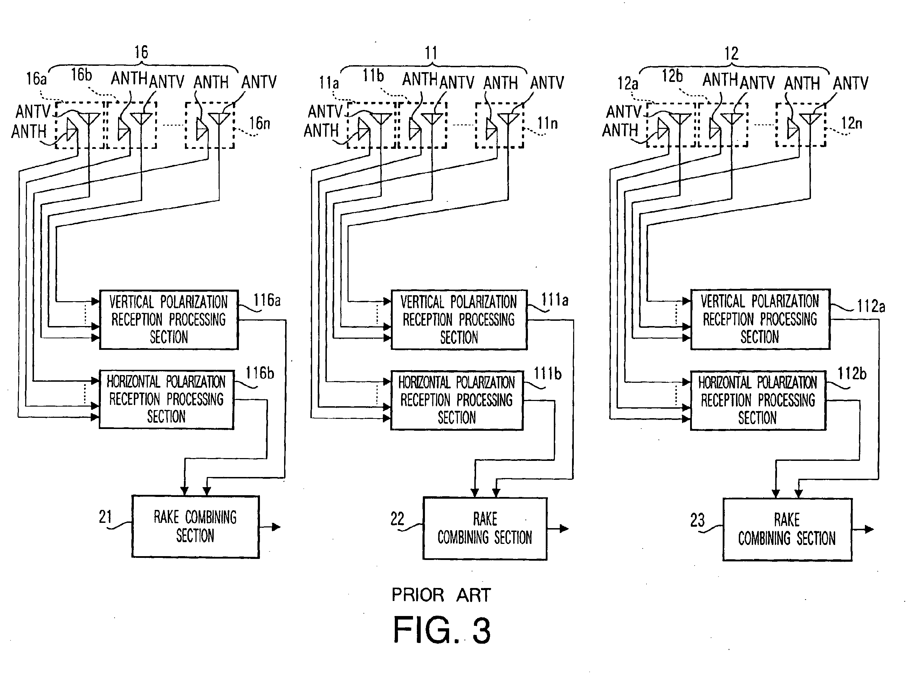

FIG.3 is a block diagram showing three neighboring adaptive array antennas 16, 11 and 12 of the adaptive array antennas 11 to 16 in FIG.2. In this FIG.3, the neighboring three adaptive array antennas 16, 11 and 12 will be explained, but suppose other adaptive array antennas 13 to 15 also have the same configuration.

As shown in FIG. 3, the adaptive array antennas 16, 11 and 12 provided for the respective sectors S16, S11 and S12 each have a plurality of polarized diversity antenna apparatuses 16a, 16b, ······, 16n, 11a, 11b, ······, 11n and 12a, 12b, ······, 12n.

The plurality of polarized diversity antenna apparatuses 11a, 11b, ······, 11n making up the adaptive array antenna 11 provided for the first sector S11 (FIG.2) has a configuration with the horizontal polarization antenna ANTH paired with vertical polarization antenna ANTV and accommodated in one unit as described in FIG.1.

Signals received through the respective vertical polarization antennas ANTV of the polarized diversity antenna apparatuses 11a, 11b, ······, 11n making up this adaptive array antenna 11 are input to a first sector vertical polarization reception processing section 111a. On the other hand, signals received through the respective horizontal polarization antennas ANTH of the polarized diversity antenna apparatuses 11a, 11b, ······ , 11n making up the adaptive array antenna 11 are input to the first sector horizontal polarization reception processing section 111b.

The first sector vertical polarization reception processing section 111a despreads each received signal, complex-multiplies each despread signal by an optimum weight (complex coefficient), array-combines the weighted signals and thereby performs adaptive array antenna (AAA) directionalcontrol on each signal. In this way, the first sector vertical polarization reception processing section 111a generates a received signal with adaptive directivity which is adapted to variations in the surrounding conditions and supplies this signal to a RAKE combining section 22.

Furthermore, the first sector horizontal polarization reception processing section 111b despreads each received signal, complex-multiplies each despread signal by an optimum weight, array-combines the weighted signal and thereby performs adaptive array antenna (AAA) directional control on each signal. In this way, the first sector horizontal polarization reception processing section 111b generates a received signal with adaptive directivity which is adapted to variations in the surrounding conditions and supplies this signal to the RAKE combining section 22.

The RAKE combining section 22 RAKE-combines the vertical and horizontal received signals with adaptive directivity output from the vertical polarization reception processing section 111a and horizontal polarization reception processing section 111b, and can thereby obtain a received signal without deterioration of the reception quality even if the reception level of either vertical polarization or horizontal polarization has fallen off.

Furthermore, the second sector vertical polarization reception processing section 112a and horizontal polarization reception processing section 112b also perform adaptive array antenna (AAA) directional control on each received signal of vertical polarization and horizontal polarization as in the case of the first sector vertical polarization reception processing section 111a and horizontal polarization reception processing section 111b. This causes the second sector vertical polarization reception processing section 112a and horizontal polarization reception processing section 112b to generate received signals with adaptive directivity adapted to variations in the surrounding conditions and supply these signals to a RAKE combining section 23. Thus, even if the reception level of either vertical polarization or horizontal polarization has fallen off in the second sector, it is also possible to obtain a received signal without deterioration of the reception quality.

Furthermore, the sixth sector vertical polarization reception processing section 116a and horizontal polarization reception processing section 116b also perform adaptive array antenna (AAA) directional control on each received signal of vertical polarization and horizontal polarization as in the case of the first sector vertical polarization reception processing section 111a and horizontal polarization reception processing section 111b. This causes the sixth sector vertical polarization reception processing section 116a and horizontal polarization reception processing section 116b to generate received signals with adaptive directivity adapted to variations in the surrounding conditions and supply these signals to a RAKE combining section 21. Thus, even if the reception level of either vertical polarization or horizontal polarization has fallen off in the sixth sector, it is also possible to obtain a received signal without deterioration of the reception quality.

Thus, the mobile communication system shown in FIG. 3 constructs an adaptive array antenna for each polarization, and can thereby achieve diversity effects on Rayleigh fading.

However, the adaptive array antenna constructed of a plurality of polarized diversity antenna apparatuses has a problem that the respective polarized diversity antenna apparatuses making up the adaptive array antenna are placed at the same locations with respect to their corresponding sector, which makes it difficult to achieve diversity effects against shadowing which occurs due to topographic obstacles.

As one of remedial actions to solve this problem, it is possible to consider a configuration in which groups of polarized diversity antenna apparatuses are arranged at positions away from one another with respect to their corresponding sector so as to achieve spatial diversity effects.

However, there is not enough space to install a plurality of groups of polarized diversity antenna apparatuses away from one another in the same sector, and therefore it has been difficult to realize a configuration to obtain spatial diversity effects.

### Disclosure of Invention

It is an object of the present invention to provide a multi-antenna apparatus, multi-antenna reception method and multi-antenna transmission method capable of making compatible effects of polarized diversity with effects of spatial diversity.

This object can be attained by transmitting/receiving vertical polarization and horizontal polarization through antenna elements provided apart with a predetermined space.

### Brief Description of Drawings

FIG. 1 is a schematic view to illustrate conventional polarized diversity;
FIG.2 is a schematic view to illustrate an example of a conventional multi-antenna arrangement;
FIG.3 is a block diagram showing a configuration of a conventional multi-antenna apparatus;
FIG.4 is a schematic view to illustrate an example of a multi-antenna arrangement according to Embodiment 1 of the present invention;
FIG.5 is a block diagram showing a configuration of a multi-antenna apparatus according to Embodiment 1;
FIG.6 is a perspective view showing a configuration of a single multi-antenna unit according to Embodiment 1;
FIG. 7 is a block diagram showing a configuration of a vertical polarization reception processing section and a horizontal polarization reception processing section according to Embodiment 1;
FIG.8 is a block diagram showing a configuration of a RAKE combining section according to Embodiment 1;
FIG.9 is a block diagram showing a configuration of a multi-antenna apparatus according to Embodiment 2 of the present invention;
FIG.10 is a block diagram showing a configuration of a vertical polarization reception processing section and a horizontal polarization reception processing section according to Embodiment 2;
FIG.11 is a block diagram showing a configuration of a multi-antenna apparatus according to Embodiment 3 of the present invention; and
FIG. 12 is a block diagram showing a configuration of a multi-antenna apparatus according to Embodiment 4 of the present invention.

### Best Mode for Carrying out the Invention

With reference now to the attached drawings, embodiments of the present invention will be explained in detail below.

### (Embodiment 1)

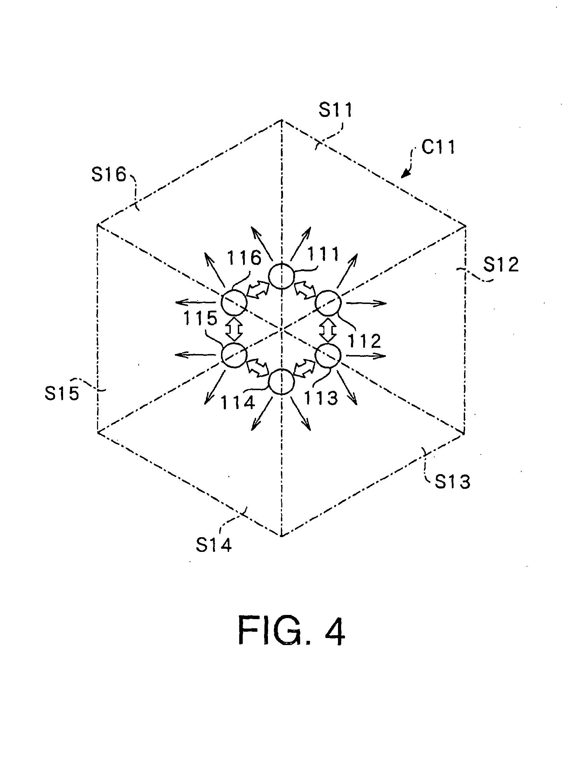

FIG.4 illustrates an arrangement of multi-antenna apparatuses as base station antennas of a mobile communication system according to Embodiment 1 of the present invention. As shown in this FIG. 4, multi-antennas 111, 112, 113, 114, 115 and 116, each of which is made up of a plurality of polarized diversity antenna apparatuses, are located on boundaries of sectors S11, S12, S13, S14, S15 and S16 of a cell C11 at a base station.

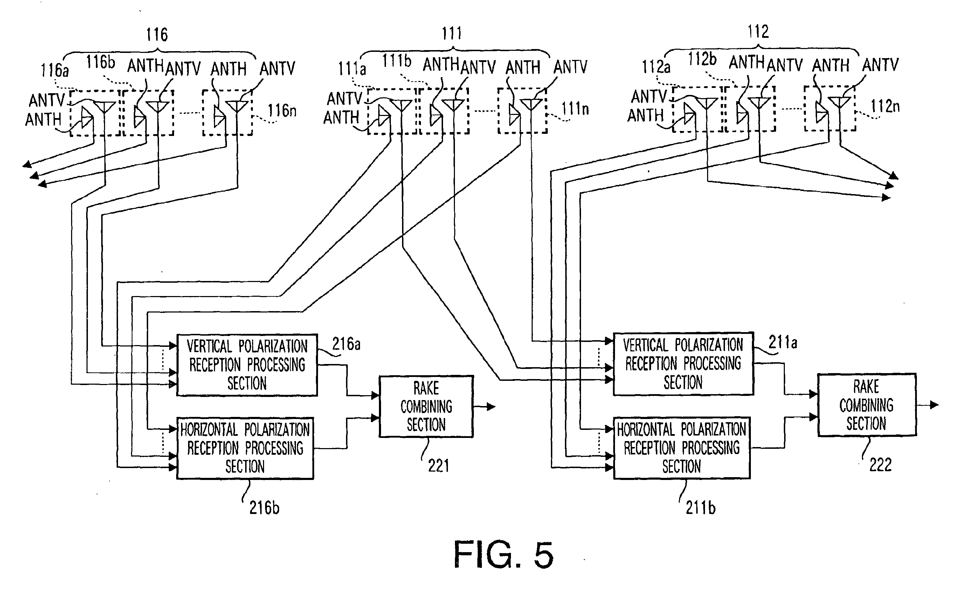

FIG.5 is a block diagram showing three neighboring adaptive array antennas 111, 112 and 116 of the adaptive array antennas 111 to 116 in FIG.4 and their received signal processing sections. The multi-antennas 111 to 116 have the same configuration, and therefore a first multi-antenna 111 will be explained here.

As shown in this FIG.5, the multi-antenna 111 is provided with a plurality of multi-antenna units 111a, 111b, ······, 111n, each made up of a pair of a vertical polarization antenna ANTV and horizontal polarization antenna ANTH, thereby forming a plurality of pairs of vertical polarization antennas ANTV and horizontal polarization antennas ANTH. By way of example, this Embodiment 1 will describe a case where a plurality of single multi-antenna units 111a, 111b to 111n, each made up of a pair of vertical polarization antenna ANTV and horizontal polarization antenna ANTH is provided, but the present invention is not limited to this and can also be adapted so as to arrange a plurality of pairs of vertical polarization antennas ANTV and horizontal polarization antennas ANTH into a unit.

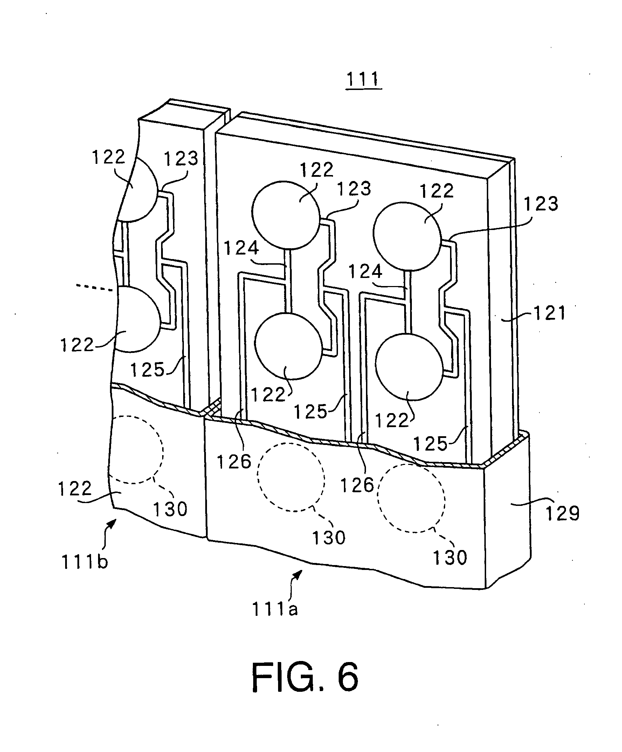

FIG.6 is a perspective view showing a configuration of a single multi-antenna unit 111a. Other single multi-antenna units 111b to 111n making up the multi-antenna 111 are assumed to have the same configuration.

As shown in this FIG. 6, the single multi-antenna unit 111a is provided with circular patch antennas 122 as radiation elements, horizontal polarization feeding points 123, vertical polarization feeding points 124, feeding lines 125 and 126 formed by applying etching processing to one side of a dielectric substrate 121 which has copper foil layers on both sides. The dielectric substrate 121 on which these elements are arranged is housed in a radome 129. Passive elements 130 are arranged on the inner surface of the radome 129 to realize wider bandwidths of the radiation elements.

The circular patch antennas 122 which constitute radiation elements operate with both horizontal and vertical polarizations. A received signal with horizontal polarization is supplied to a horizontal polarization reception processing section 216b shown in FIG.5 through the horizontal polarization feeding points 123 and feeding lines 125 and a received signal with vertical polarization is supplied to a vertical polarization reception processing section 211a through the vertical polarization feeding points 124 and feeding lines 126. In this way, the single multi-antenna unit 111a constitutes a horizontal polarization antenna ANTH through the circular patch antennas 122 and horizontal polarization feeding points 123, and constitutes a vertical polarization antenna ANTV through the circular patch antennas 122 and vertical polarization feeding points 124.

Then, likewise in the other multi-antenna units 111b to 111n constituting the multi-antenna 111, a signal received through each horizontal polarization antenna ANTH is supplied to the horizontal polarization reception processing section 216b and a signal received through each vertical polarization antenna ANTV is supplied to the vertical polarization reception processing section 211a.

Here, the vertical polarization reception processing section 211a is designed to receive signals received through the respective vertical polarization antennas ANTV of the multi-antenna 111 provided on the boundary between the sixth sector S16 and the first sector S11 (FIG.4) neighboring thereto in clockwise direction and the horizontal polarization reception processing section 211b which forms a pair with the vertical polarization reception processing section 211a is designed to receive signals received through the respective horizontal polarization antennas ANTH of the multi-antenna 112 provided on the boundary between the first sector S11 and the second sector S12 (FIG. 4) neighboring thereto in clockwise direction.

In this way, the vertical polarization reception processing section 211a and horizontal polarization reception processing section 211b are designed to receive signals received through the vertical polarization antennas ANTV (vertical polarization antennas constituting the multi-antenna 111) and horizontal polarization antennas ANTH (horizontal polarization antennas constituting the multi-antenna 112) provided apart by a predetermined distance (about 10 to 15 times the wavelength) at both edges of the first sector S11.

The vertical polarization reception processing section 211a and horizontal polarization reception processing section 211b apply dispreading processing to their respective received signals, complex-multiply the despread signals by optimum weights and array-combine them, and thereby perform adaptive (AAA) directional control on the respective signals. Thus, the signals received through the vertical polarization antennas ANTV and horizontal polarization antennas ANTH placed at both edges of the first sector S11 are supplied to the RAKE combining section 222 as received signals with adaptive directivity adapted to variations in surrounding conditions.

The RAKE combining section 222 applies RAKE combining processing to the respective output signals of the vertical polarization reception processing section 211a and horizontal polarization reception processing section 211b. In this way, a RAKE-combined signal, which is a combination of the signals received through the vertical polarization antennas ANTV and horizontal polarization antennas ANTH placed at both ends of the first sector S11, is obtained as the output of the RAKE combining section 222. Since this RAKE-combined signal is obtained by combining the signals received through the vertical polarization antennas ANTV and horizontal polarization antennas ANTH provided apart by a predetermined distance in the first sector S11, it is possible to obtain an effect of spatial diversity and obtain an effect of reducing the probability that the reception quality will deteriorate against fading called "shadowing" having a large non-correlated distance due to influences of buildings, etc., in addition to the effect of reducing the probability that the reception quality will deteriorate due to fading such as Rayleigh fading.

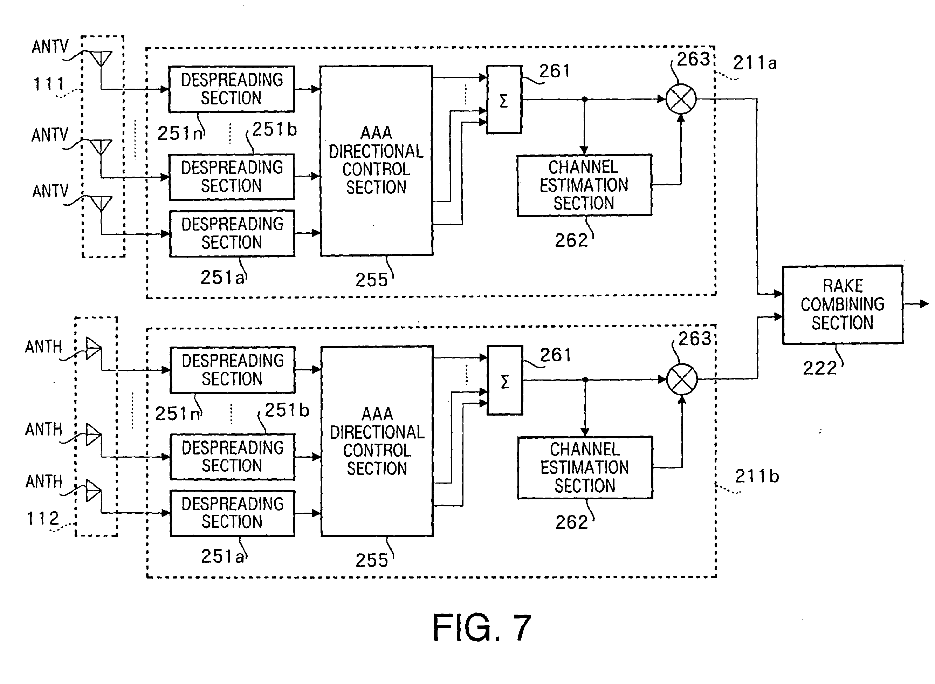

FIG.7 is a block diagram showing a configuration of a vertical polarization reception processing section 211a and a horizontal polarization reception processing section 211b based on a CDMA (Code Division Multiple Access) system. As shown in this FIG. 7, signals received through the respective vertical polarization antennas ANTV of the multi-antenna 111 are input to despreading sections 251a, 251b, ······, 251n of the vertical polarization reception processing section 211a and the signals before the spreading are restored by multiplying them by spreading codes corresponding to their respective mobile stations.

The despread signals are supplied to an adaptive array antenna (AAA) directional control section 255. The AAA directional control section 255 functions as an adaptive directivity forming section, assigns optimum weights to a plurality of received signals obtained from the despreading sections 251a to 251n and a calculation section 261 then array-combines the plurality of received signals. In this case, the AAA directional control section 255 executes a predetermined algorithm to calculate optimum weights. For the algorithm here, MMSE (Minimum Mean Square Error) which selects a weight that minimizes the difference between a desired signal and received signal and MSN (Maximum Signal to Noise ratio) which maximizes the reception SNR (Signal to Noise Ratio ) , etc., are available.

The AAA directional control section 255 of this Embodiment 1 is designed to calculate an optimum weight by executing an MMSE quickest descending method (LMS (Least Mean Square)) algorithm as the optimization algorithm.

The received signal with adaptive directivity formed by the adaptive array antenna (AAA) directional control section 255 using the optimum weight in this way is subjected to channel estimation by a channel estimation section 262, its shift on the IQ plane is complex-multiplied by a multiplication section 263 and a signal corrected for the shift is obtained. This signal is supplied to the RAKE combining section 222 that follows .

Furthermore, the signals received through the respective horizontal polarization antennas ANTH of the multi-antenna 112 are input to the despreading sections 251a, 251b, ······, 251n of the horizontal polarization reception processing section 211b and the signals before the spreading are restored by multiplying them by spreading codes corresponding to their respective mobile stations.

The despread signals are supplied to an adaptive array antenna (AAA) directional control section 255. The AAA directional control section 255 functions as a adaptive directivity forming section, assigns optimum weights to a plurality of received signals obtained from the despreading sections 251a to 251n and a calculation section 261 then combines array-combines the plurality of received signals. In this case, the AAA directional control section 255 executes a predetermined algorithm to calculate optimum weights that maximizes the received signal level.

The AAA directional control section 255 of this Embodiment 1 is designed to calculate an optimum weight by executing a quickest descending method (LMS (Least Mean Square)) algorithm as the optimization algorithm.

The received signal with adaptive directivity formed by the AAA directional control section 255 using the optimum weight in this way is subjected to channel estimation by a channel estimation section 262, its shift on the IQ plane is complex-multiplied by the multiplication section 263 and a signal corrected for the shift is obtained. This signal is supplied to the RAKE combining section 222 that follows.

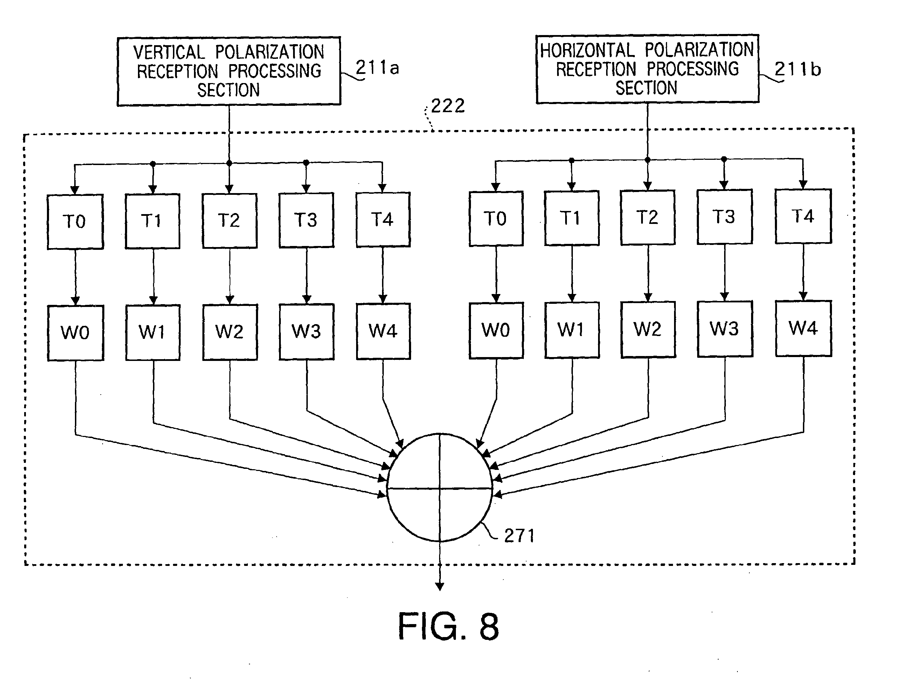

FIG.8 is a block diagram showing a configuration of the RAKE combining section 222 . As shown in this FIG.8, the RAKE combining section 222 corrects the shift in the time area of the received array-combined signal output from the vertical polarization reception processing section 211a by their respective delay taps T0 to T4, thereby corrects the time differences due to differences in the path through which signals have arrived, multiplies the outputs of the delay taps T0 to T4 by weighting factors W0 to W4 and outputs the multiplication result to an adder 271.

Furthermore, the RAKE combining section 222 corrects the shift in the time area of the received array-combined signal output from the horizontal polarization reception processing section 211b by their respective delay taps T0 to T4, thereby corrects the time differences due to differences in the path through which signals have arrived, multiplies the outputs of the delay taps T0 to T4 by weighting factors W0 to W4 and outputs the multiplication result to the adder 271.

Thus, the adder combines the received signals with horizontal polarization and vertical polarization. This combination result is output to a demodulation section (not shown) where data is demodulated.

In the above-described configuration, the multi-antennas 111 to 116 provided on the boundaries of the sectors S11 to S16 each have a configuration combining vertical polarization antennas ANTV and horizontal polarization antennas ANTH. The single multi-antenna unit 111a making up this multi-antenna used here is obtained by combining a plurality of polarized diversity antenna units or combining a plurality of vertical polarization antennas ANTV and horizontal polarization antennas ANTH.

Then, of the neighboring multi-antennas (e.g., multi-antennas 111 and 112), by combining the received signals of vertical polarization antennas ANTV making up one multi-antenna 111 and horizontal polarization antennas ANTH making up the other multi-antenna 112, polarized diversity corresponding to the first sector S11 sandwiched between these two multi-antennas 111 and 112 is configured. In this polarized diversity configuration, the antennas of the (neighboring) multi-antennas 111 and 112 whose vertical polarization antennas ANTV and horizontal polarization antennas ANTH are different are used and placed apart by a predetermined distance (e.g., 10 to 15 times the wavelength). This also produces the effect of reducing the probability that the reception quality will deteriorate against fading called "shadowing" having a large non-correlated distance due to influences by buildings compared to the conventional case where vertical polarization antennas ANTV integral with horizontal polarization antennas ANTH are used as the antennas for the same sector.

Furthermore, according to the configuration of this Embodiment 1, the vertical polarization antenna ANTV and horizontal polarization antenna ANTH formed as one piece in one single multi-antenna unit 111a are used for different (neighboring) sectors (e.g., first sector S11 and second sector S12), and thereby one single multi-antenna unit 111a, that is, the vertical polarization antennas ANTV integral with the horizontal polarization antennas ANTH are shared for vertical polarization reception and horizontal polarization reception of the neighboring sectors.

As a result, compared to the case where antennas for different sectors are constructed with different antennas, it is possible to effectively avoid upsizing of the entire apparatus . Therefore, for an adaptive array requiring a plurality of vertical polarization antennas ANTV and horizontal polarization antennas ANTH, it is possible to avoid reduction of the degree of freedom of installation locations due to upsizing of the entire apparatus and realize effective polarized diversity against fading such as shadowing together with the adaptive array.

In this way, the multi-antenna apparatus of this embodiment constitutes an adaptive array using a plurality of polarized diversity antenna apparatuses, and can thereby avoid upsizing of the entire apparatus and also effectively achieve effects of spatial diversity against shadowing. This makes it possible to enhance the reception characteristic at the base station and mobile station, reduce transmit power of the mobile station and base station and reduce the amount of interference, thus increasing the system capacity.

Above described Embodiment 1 has described the case where the multi-antennas 111 to 116 are arranged in a circular form, but the present invention is not limited to this and can also be adapted so as to arrange them in a linear or rectangular form or other arrangement forms . Moreover, some multi-antennas may be constructed of vertical polarization antennas ANTV only or horizontal polarization antennas ANTH only.

Furthermore, above-described Embodiment 1 has described the case where a CDMA system is used as a modulation/demodulation system, but the present invention is not limited to this.

Furthermore, above described Embodiment 1 has described the case where single multi-antenna units 111a, 111b, ······ with circular patch antenna elements are used, but the present invention is not limited to this and can also be adapted so as to provide independent antenna elements to receive and/or transmit vertical polarization and horizontal polarization.

### (Embodiment 2)

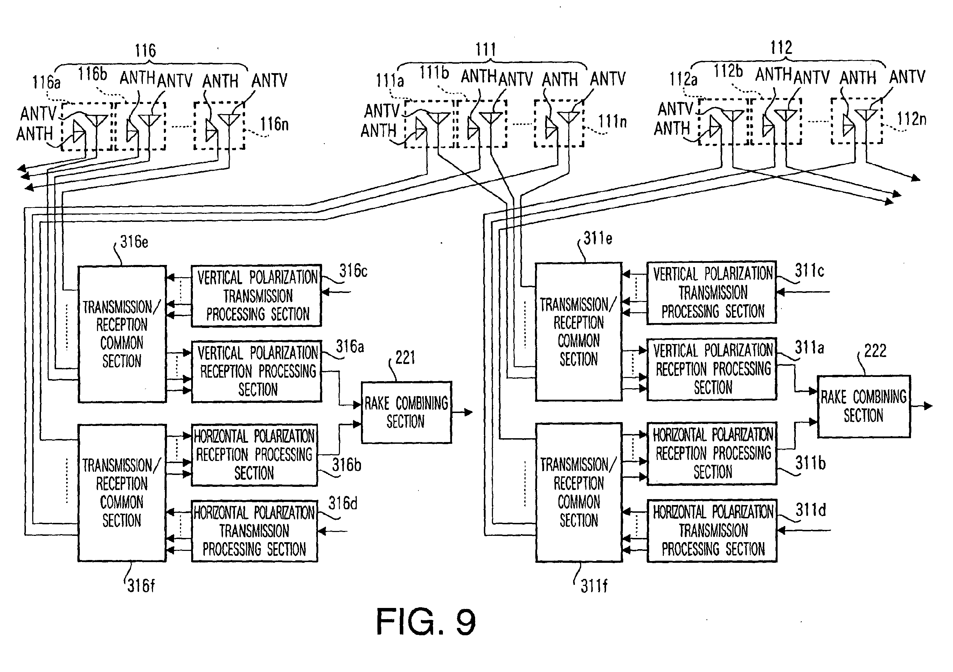

FIG.9 illustrates an arrangement of multi-antenna apparatuses as base station antennas and transmission/received signal processing sections of a base station in a mobile communication system according to Embodiment 2 of the present invention. However, the same components as those in FIG.5 are assigned the same reference numerals as those in FIG.5 and detailed explanations thereof will be omitted.

The mobile communication system shown in this FIG.9 is different from the configuration in FIG.5 in that it is provided with vertical polarization transmission processing sections 311c and 311d, horizontal polarization transmission processing sections 316c and 316d and transmission/reception common sections 311e, 311f, 316e and 316f and can also perform transmission.

In FIG.9, the vertical polarization antennas ANTV of the multi-antenna 111 are connected to the transmission/reception common section 311e and the horizontal polarization antennas ANTH of the multi-antenna 112 are connected to the transmission/reception common section 311f.

Therefore, signals received through the vertical polarization antennas ANTV of the multi-antenna 111 are supplied to the vertical polarization reception processing section 311a through the transmission/reception common section 311e, while signals received through the horizontal polarization antennas ANTH of the multi-antenna 112 are supplied to the horizontal polarization reception processing section 311b through the transmission/reception common section 311f.

The vertical polarization reception processing section 311a and horizontal polarization reception processing section 311b perform dispreading processing on the respective received signals, complex-multiply the despread signals by optimum weights and array-combine them and thereby perform adaptive array antenna (AAA) directional control on the respective signals. This causes the signals received through the vertical polarization antennas ANTV and horizontal polarization antennas ANTH provided at both edges of the first sector S11 (FIG.4) to be supplied to the RAKE combining section 222 as received signals with adaptive directivity which are adapted to variations in surrounding conditions.

The RAKE combining section 222 performs RAKE combining processing on the output signals of the vertical polarization reception processing section 311a and horizontal polarization reception processing section 311b. In this way, a RAKE-combined signal which has been obtained by combining the signals received through vertical polarization antennas ANTV and horizontal polarization antennas ANTH provided at both ends of the first sector S11 is obtained as the output of the RAKE combining section 222

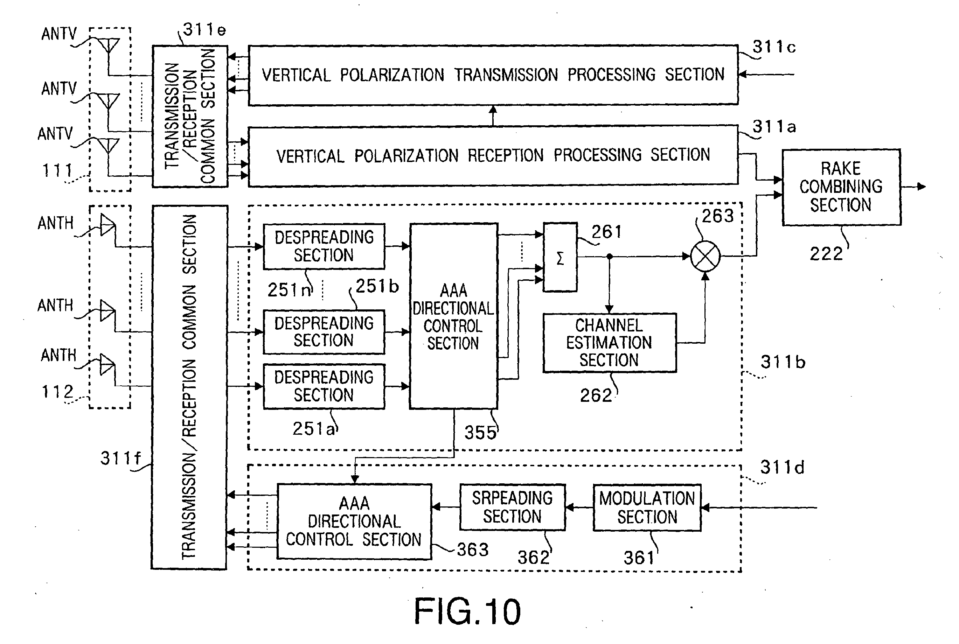

FIG. 10 is a block diagram showing configurations of the CDMA-based vertical polarization reception processing section 311a, horizontal polarization reception processing section 311b, vertical polarization transmission processing section 311c and horizontal polarization transmission processing section 311d. In this FIG. 10, suppose the vertical polarization reception processing section 311a and vertical polarization transmission processing section 311c have the same configurations as those of the horizontal polarization reception processing section 311b and horizontal polarization transmission processing section 311d respectively.

In this FIG.10, signals received through the respective horizontal polarization antennas ANTH of the multi-antenna 112 are subjected to frequency conversion processing and amplification processing through a transmission/reception common section 311f, then input to despreading sections 251a, 251b, ······,251n of a horizontal polarization reception processing section 211a, multiplied by spreading codes corresponding to their respective mobile stations and the signals before the spreading are thereby restored.

The despread signals are supplied to an adaptive arrayantenna(AAA)directionalcontrolsection355. The AAA directional control section 355 functions as adaptive directional forming means, assigns optimum weights to a plurality of received signals obtained from the despreading sections 251a to 251n and a calculation section 261 array-combines the plurality of received signals. In this case, the AAA directional control section 355 calculates optimum weights by executing a predetermined algorithm. As the algorithm here, MMSE which selects a weight corresponding to a minimum difference between a desired signal and received signal and MSN which maximizes a reception SNR, etc., are available.

The AAA directional control section 355 of this Embodiment 1 is designed to determine an optimum weight by executing an MMSE quickest descending method (LMS (Least Mean Square)) algorithm as the optimization algorithm. This optimum weight is supplied to the horizontal polarization transmission processing section 311d and used for transmission.

The received signal with adaptive directivity formed by the AAA directional control section 355 with an optimum weight is subjected to channel estimation by a channel estimation section 262 and its shifted portion on the IQ plane is complex-multiplied by a multiplication section 263 and thereby a signal corrected for the shifted portion is obtained. This signal is supplied to the RAKE combining section 222 that follows.

On the other hand, signals received through the vertical polarization antennas ANTV of the multi-antenna 111 are input to the vertical polarization reception processing section 311a through the transmission/reception common section 311f, multiplied by optimum weights in the same way as in the case of the horizontal polarization reception processing section 311b, corrected through channel estimation processing as a received signal with adaptive directivity and then supplied to the RAKE combining section 222. This vertical polarization reception processing section 311a supplies optimum weights to the vertical polarization transmission processing section 311c and the vertical polarization transmission processing section 311c thereby uses the optimum weights for transmission.

Furthermore, the horizontal polarization transmission processing section 311d modulates the input transmission signals according to a modulation system such as 16QAM (Quadrature Amplitude Modulation), 64QAM or QPSK (Quadriphase Phase Shift Keying) at the modulation section 361 and spreads the results at a spreading section 362. Then, the horizontal polarization transmission processing section 311d performs AAA directional control on the spread signals at an AAA directional control section 363.

In this case, the AAA directional control section 363 converts the frequency with the optimum weights supplied from the AAA directional control section 355 of the horizontal polarization reception processing section 311b and multiplies the respective transmission signals to be supplied to the horizontal polarization antennas ANTH by the optimum weights and supplies the multiplication results to the respective horizontal polarization antennas ANTH of the multi-antenna 112 through the transmission/reception common section 311f and thereby transmits a transmission signal with the optimum directivity obtained during reception. Here, the frequency conversion refers to converting, when the carrier frequency of a received signal is different from the carrier frequency of a transmission signal, the optimum weight obtained from the received signal to the carrier frequency of the transmission signal and determining optimum weights.

Furthermore, the vertical polarization transmission processing section 311c also has the same configuration as that of the horizontal polarization transmission processing section 311d, performs processing such as frequency conversion on the optimum weights obtained at the AAA directional control section of the vertical polarization reception processing section 311a, multiplies the transmission signals by the weights and supplies the multiplication results to the vertical polarization antennas ANTV of the multi-antenna 111 through the transmission/reception common section 311e and thereby transmits a transmission signal with the optimum directivity obtained during reception.

Thus, with the configuration in FIG.10, transmission directional control is also possible for transmission signals and the transmission signals are sent from the vertical polarization antennas ANTV of the multi-antenna 111 and the horizontal polarization antennas ANTH of the multi-antenna 112 to the first sector S11 under the optimum AAA directional control.

In this case, transmission is carried out using the vertical polarization antennas ANTV of the multi-antenna 111 and the horizontal polarization antennas ANTH of the multi-antenna 112 as the antennas for transmitting transmission signals placed apart from one another and it is thereby possible to obtain effects of spatial diversity in addition to effects of polarized diversity during transmission.

In the above described configuration, the multi-antennas 111 to 116 provided on boundaries of the sectors S11 to S16 have a configuration with vertical polarization antennas ANTV combined with horizontal polarization antennas ANTH. The single multi-antenna unit 111a making up this multi-antenna uses a combination of a plurality of polarized diversity antenna units or vertical polarization antennas ANTV combined with horizontal polarization antennas ANTH.

Then, by supplying transmission signals to vertical polarization antennas ANTV of the multi-antenna 111, which constitutes one of the neighboring multi-antennas (e.g., multi-antenna 111 and 112) and horizontal polarization antennas ANTH of the other multi-antenna 112, it is possible to constitute polarized diversity for transmission corresponding to the first sector S11 which is sandwiched between the two multi-antenna 111 and 112. In this configuration of polarized diversity, the multi-antennas 111 and 112 have different (neighboring) vertical polarization antennas ANTV and horizontal polarization antennas ANTH, which are separated from one another by a predetermined distance (about 10 to 15 times the wavelength), which makes it possible to obtain an effect of reducing the probability that the transmission quality with deteriorate against fading called "shadowing" having a large non-correlated distance influenced by buildings, etc., compared to the conventional case where vertical polarization antennas ANTV integral with horizontal polarization antennas ANTH are used for the same sector.

Then, according to the configuration of this Embodiment 2, the vertical polarization antenna ANTV formed integral with the horizontal polarization antenna ANTH of one single multi-antenna unit 111a are used for different (neighboring) sectors (e.g., first sector S11 and second sector S12), and therefore one single multi-antenna unit 111a, that is, the vertical polarization antenna ANTV integral with horizontal polarization antenna ANTH are shared for vertical polarization transmission and horizontal polarization transmission of neighboring sectors.

As a result, it is possible to effectively avoid upsizing of the entire apparatus compared to the case where antennas for different sectors are constructed of independent antennas. Therefore, it is possible for an adaptive array requiring a plurality of vertical polarization antennas ANTV and horizontal polarization antennas ANTH to avoid reduction in the degree of freedom in installation locations due to upsizing of the entire apparatus and realize effective polarized diversity together with adaptive array against fading such as shadowing.

Thus, according to the multi-antenna apparatus of this embodiment, an adaptive array is constructed using a plurality of polarized diversity antenna apparatuses, thus achieving spatial diversity effects against shadowing while avoiding upsizing of the entire apparatus . This makes it possible to improve the reception characteristic of mobile stations, reduce transmit power of base stations and reduce the amount of interference and thereby increase the system capacity.

Above described Embodiment 2 has described the case where the multi-antennas 111 to 116 are arranged in a circular form, but the present invention is not limited to this and can also be adapted so as to arrange them in a linear or rectangular form or other arrangement forms . Moreover, some multi-antennas may be constructed of vertical polarization antennas ANTV only or horizontal polarization antennas ANTH only.

Furthermore, above-described Embodiment 2 has described the case where a CDMA system is used as a modulation/demodulation system, but the present invention is not limited to this.

Furthermore, above described Embodiment 2 has described the case where single multi-antenna units 111a, 111b, ······ with circular patch antenna elements are used, but the present invention is not limited to this and can also be adapted so as to provide independent antenna elements to receive and/or transmit vertical polarization and horizontal polarization.

### (Embodiment 3)

Above described Embodiment 1 and Embodiment 2 have described the case where an adaptive array is constructed using a plurality of vertical polarization antennas ANTV and a plurality of horizontal polarization antennas ANTH, but the present invention is not limited to this and it is possible to achieve both effects of polarized diversity and effects of spatial diversity simultaneously by placing one vertical polarization antenna ANTV and one horizontal polarization antenna ANTH apart by a predetermined distance (10 to 15 the wavelength).

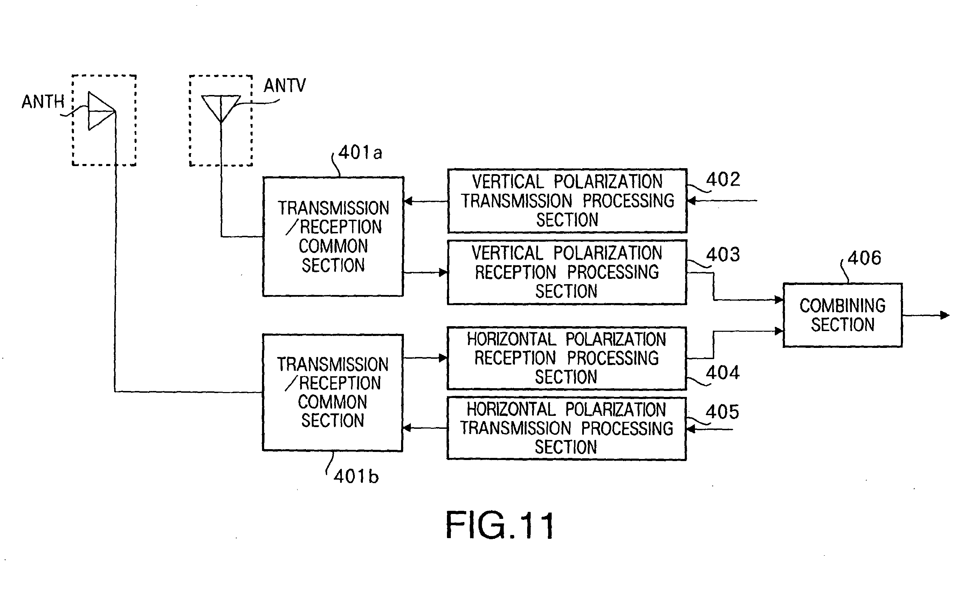

That is, FIG. 11 is a block diagram showing an example of arrangement of a multi-antenna apparatus as a base station antenna in a mobile communication system according to Embodiment 3. As shown in this FIG.11, a vertical polarization antenna ANTV and a horizontal polarization antenna ANTH which are independent of each other are placed apart by a predetermined distance and the vertical polarization antenna ANTV is connected to a transmission/reception common section 401a and the horizontal polarization antenna ANTH is connected to a transmission/reception common section 401b.

In this way, a signal received through the vertical polarization antenna ANTV is supplied to a vertical polarization reception processing section 403 and a signal received through the horizontal polarization antenna ANTH is supplied to a horizontal polarization reception processing section 404.

The vertical polarization reception processing section 403 demodulates the received signal according to a predetermined system and supplies the result to a combination section 406. The horizontal polarization reception processing section 404 demodulates the received signal according to a predetermined system and supplies the result to the combination section 406. The combination section 406 combines the demodulated signal supplied from the vertical polarization reception processing section 403 and the demodulated signal supplied from the horizontal polarization reception processing section 404 and outputs the combined signal.

Furthermore, a vertical polarization transmission processing section 402 modulates an input transmission signal according to a predetermined modulation system and supplies this to the vertical polarization antenna ANTV through the transmission/reception common section 401a. On the other hand, a horizontal polarization transmission processing section 405 modulates an input transmission signal (the same signal as the transmission signal input to the polarization transmission processing section 402) according to a predetermined modulation system and supplies this to the vertical polarization antenna ANTV through the transmission/reception common section 401b. In this way, transmission signals are transmitted from the vertical polarization antenna ANTV and horizontal polarization antenna ANTH.

Thus, the multi-antenna apparatus according to this embodiment provides the vertical polarization antenna ANTV and horizontal polarization antenna ANTH independently of each other, and can thereby achieve both effects of polarized diversity and effects of spatial diversity in a simple configuration.

### (Embodiment 4)

Above described Embodiment 1 and Embodiment 2 have described the case where an adaptive array is constructed using a plurality of vertical polarization antennas ANTV and a plurality of horizontal polarization antennas ANTH, but the present invention is not limited to this and it is possible to achieve both effects of polarized diversity and effects of spatial diversity simultaneously by arranging single polarized diversity units away from one another by a predetermined distance (10 to 15 times the wavelength) and using vertical polarization antennas ANTV and horizontal polarization antennas ANTH of the respective single polarization diversity units as antennas for their respective neighboring sectors.

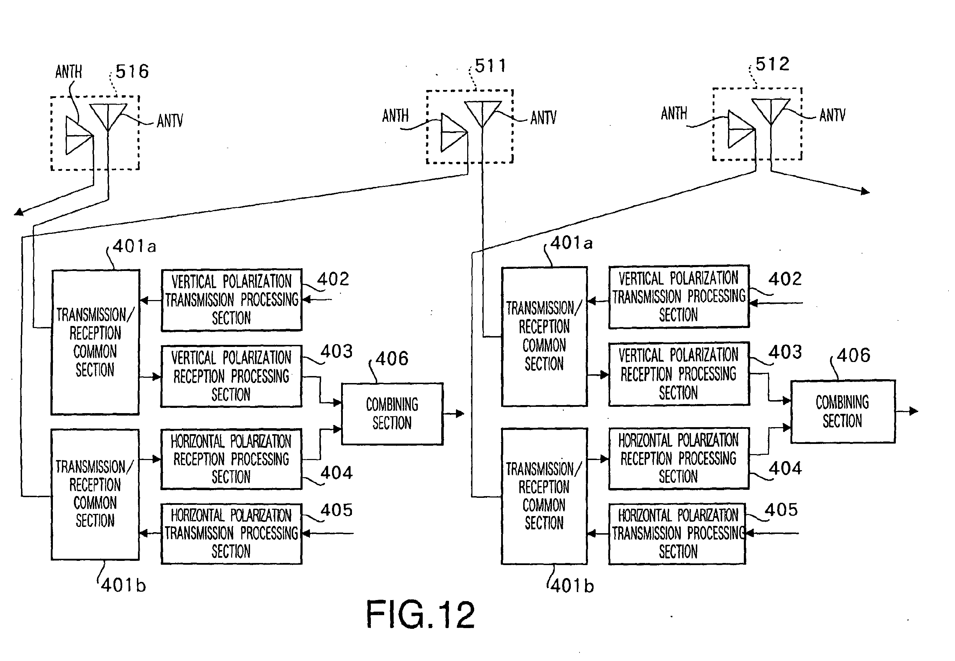

That is, FIG. 12 is a block diagram showing an example of arrangement of a multi-antenna apparatus as a base station antenna in a mobile communication system according to Embodiment 4. As shown in this FIG.12, single polarized diversity units 516, 511, 512,······ are placed apart from one another by a predetermined distance corresponding to the respective sectors, the vertical polarization antenna ANTV of the single polarized diversity unit 511 is connected to a transmission/reception common section 401a and the horizontal polarization antenna ANTH of the single polarized diversity unit 512 is connected to a transmission/reception common section 401b.

This causes a signal received through the vertical polarization antenna ANTV is supplied to a vertical polarization reception processing section 403 and a signal received through the horizontal polarization antenna ANTH is supplied to a horizontal polarization reception processing section 404.

The vertical polarization reception processing section 403 demodulates the received signal according to a predetermined system and supplies the result to a combination section 406. The horizontal polarization reception processing section 404 demodulates the received signal according to a predetermined system and supplies the result to the combination section 406. The combination section 406 combines the demodulated signal supplied from the vertical polarization reception processing section 403 and the demodulated signal supplied from the horizontal polarization reception processing section 404 and outputs the combined signal.

Furthermore, a vertical polarization transmission processing section 402 modulates an input transmission signal according to a predetermined modulation system and supplies this to the vertical polarization antenna ANTV through the transmission/reception common section 401a. On the other hand, a horizontal polarization transmission processing section 405 modulates an input transmission signal (the same signal as the transmission signal input to the polarization transmission processing section 402) according to a predetermined modulation system and supplies this to the vertical polarization antenna ANTV through the transmission/reception common section 401b. In this way, transmission signals are transmitted from the vertical polarization antennas ANTV and horizontal polarization antennas ANTH.

Thus, the multi-antenna apparatus according to this embodiment uses vertical polarization antennas ANTV and horizontal polarization antennas ANTH of the single polarized diversity units 516, 511, 512, as antennas for their respective neighboring sectors, and can thereby achieve both effects of polarized diversity and effects of spatial diversity for the respective sectors.

The multi-antenna apparatus of the present invention comprises a pair of antenna elements provided apart by a predetermined distance which receive polarizations orthogonal to each other and a reception processing section that performs demodulation and combination processing on signals received through the antenna elements.

According to this configuration, vertical polarization and horizontal polarization received through the pair of antenna elements provided apart by a predetermined distance are combined, and therefore it is possible to make compatible effects of polarized diversity with effects of spatial diversity during reception.

The multi-antenna apparatus of the present invention comprises a pair of antenna elements provided apart by a predetermined distance which transmit polarizations orthogonal to each other and a transmission processing section which applies modulation processing to predetermined signals and supplies them to the antenna elements.

This configuration transmits vertical polarization and horizontal polarization through the pair of antenna elements placed apart by a predetermined distance, and can thereby make compatible effects of polarized diversity with effects of spatial diversity during transmission.

The multi-antenna apparatus of the present invention comprises a first antenna unit having antenna elements which receive vertical polarization and horizontal polarization, a second antenna unit provided apart by a predetermined distance from the first antenna unit having antenna elements which receive vertical polarization and horizontal polarization and a reception processing section that applies demodulation and combination processing to the vertical polarization received by the first antenna unit and the horizontal polarization received by the second antenna unit.

According to this configuration, of the first and second antenna units provided apart by a predetermined distance for receiving both vertical polarization and horizontal polarization, the vertical polarization received by the first antenna unit and the horizontal polarization received by the second antenna unit are combined, and therefore it is possible for the units constituting polarized diversity to easily construct the first and second antenna units and make compatible effects of polarized diversity with effects of spatial diversity during reception.

The first and second antenna units of the multi-antenna apparatus of the present invention each comprise a plurality of the above described antenna elements, and the multi-antenna apparatus further comprises a first directional control section that multiplies the plurality of vertical polarizations received by the plurality of antenna elements of the first antenna unit by adaptive weights and then combines the multiplication results to generate a received signal with adaptive directivity, a second directional control section that multiplies the plurality of horizontal polarizations received by the plurality of antenna elements of the second antenna unit by adaptive weights and then combines the multiplication results to generate a received signal with adaptive directivity, and a combination section that combines the received signals with adaptive directivity generated by the first and second directional control sections.

This configuration performs adaptive directional control on vertical polarizations received through the plurality of antenna elements of the first antenna unit and horizontal polarizations received through the plurality of antenna elements of the second antenna unit of the plurality of antenna elements provided for the first and second antenna units which are separated from each other, and can thereby realize effects of polarized diversity and effects of spatial diversity and improve the reception quality through adaptive directional control simultaneously in a simple configuration.

The multi-antenna apparatus of the present invention comprises a first antenna unit having antenna elements that transmit vertical polarization and horizontal polarization, a second antenna unit provided apart by a predetermined distance from the first antenna unit having antenna elements which transmit vertical polarization and horizontal polarization, a first transmission section that transmits a modulated signal from the first antenna unit as vertical polarization and a second transmission section that transmits the modulated signal from the second antenna unit as horizontal polarization.

According to this configuration, of the first and second antenna units provided apart by a predetermined distance for receiving both vertical polarization and horizontal polarization, the vertical polarization is sent from the first antenna unit and the horizontal polarization is sent from the second antenna unit, and it is therefore possible to easily construct the first and second antenna units with the units constituting polarized diversity and make compatible effects of polarized diversity with effects of spatial diversity during transmission.

The multi-antenna apparatus of the present invention comprises a first antenna unit having a plurality of antenna elements that transmit/receive vertical polarization and horizontal polarization, a second antenna unit provided apart by a predetermined distance from the first antenna unit having a plurality of antenna elements which receive vertical polarization and horizontal polarization, a first directional control section that multiplies the plurality of vertical polarizations received by the plurality of antenna elements of the first antenna unit by adaptive weights, then combines the multiplication results to generate a received signal with adaptive directivity, a second directional control section that multiplies the plurality of horizontal polarizations received by the plurality of antenna elements of the second antenna unit by adaptive weights, then combines the multiplication results to generate a received signal with adaptive directivity, a combination section that combines the received signals with adaptive directivity generated by the first and second directional control sections, a first transmission section that transmits the result of a multiplication of the modulated signals by the adaptive weights multiplied on the vertical polarization from the first antenna unit as vertical polarization, and a second transmission section that transmits the result of a multiplication of the modulated signals by the adaptive weights multiplied on the horizontal polarization from the second antenna unit as horizontal polarization.

This configuration makes it possible to not only obtain the effect of polarized diversity and effect of spatial diversity during transmission, but also add directional control by the optimum weights obtained from the received signal, and thereby improve the reception quality at the transmission destination and reduce transmit power of the base station which is the transmission source.

The multi-antenna apparatus of the present invention comprises a first antenna element group having at least one pair of antenna elements which receive vertical polarization and horizontal polarization, a second antenna element group having at least one pair of antenna elements provided apart by a predetermined distance from the first antenna elements which receive vertical polarization and horizontal polarization, and a reception processing section that applies demodulation and combination processing to the vertical polarization received by the first antenna element group and the horizontal polarization received by the second antenna element group.

This configuration combines the vertical polarization and horizontal polarization received through the pair of antenna elements provided apart by a predetermined distance, and can thereby make compatible effects of polarized diversity with effects of spatial diversity during reception.

The multi-antenna apparatus of the present invention comprises a first antenna element group having at least one pair of antenna elements which transmit vertical polarization and horizontal polarization, a second antenna element group having at least one pair of antenna elements provided apart by a predetermined distance from the first antenna element group which transmit vertical polarization and horizontal polarization, a first transmission section that transmits the modulated signal from the first antenna element group as vertical polarization, and a second transmission section that transmits the modulated signal from the second antenna element group as horizontal polarization.

This configuration transmits vertical polarization and horizontal polarization through the pair of antenna elements provided apart by a predetermined distance, and can thereby make compatible effects of polarized diversity with effects of spatial diversity during transmission.

The multi-antenna apparatus of the present invention comprises a first antenna element group having a plurality of antenna elements which receive vertical. polarization and horizontal polarization, a second antenna element group having a plurality of antenna elements provided apart by a predetermined distance from the first antenna element group which receive vertical polarization and horizontal polarization, anda reception processing section that applies demodulation and combination processing to the vertical polarizations received by the first antenna element group and the horizontal polarizations received by the second antenna element group.

This configuration combines vertical polarization and horizontal polarization received through the pair of antenna elements provided apart by a predetermined distance, and can thereby make compatible effects of polarized diversity with effects of spatial diversity during reception.

The multi-antenna apparatus of the present invention comprises a first antenna element group having a plurality of antenna elements which transmit vertical polarization and horizontal polarization, a second antenna element group having antenna elements provided apart by a predetermined distance from the first antenna element group which transmit vertical polarization and horizontal polarization, a first transmission section that transmits a modulated signal from the first antenna element group as vertical polarization and a second transmission section that transmits the modulated signal from the second antenna element group as horizontal polarization.

This configuration transmits vertical polarization and horizontal polarization through the pair of antenna elements provided apart by a predetermined distance, and can thereby make compatible effects of polarized diversity and effects of spatial diversity during transmission.

The multi-antenna reception method of the present invention comprises a first demodulating step of demodulating vertical polarization received by a first antenna unit having antenna elements which receive vertical polarization and horizontal polarization, a second demodulating step of demodulating horizontal polarization received by a second antenna unit provided apart by a predetermined distance from the first antenna unit having antenna elements which receive vertical polarization and horizontal polarization and a combining step of combining signals demodulated in the first and second demodulating steps.

This method combines vertical polarization and horizontal polarization received through a pair of antenna elements provided apart by a predetermined distance, and can thereby make compatible effects of polarized diversity and effects of spatial diversity during reception.

The multi-antenna transmission method of the present invention is a transmission method for a multi-antenna including a first antenna unit having antenna elements which transmit vertical polarization and horizontal polarization and a second antenna unit having antenna elements provided apart by a predetermined distance from the first antenna unit which transmit vertical polarization and horizontal polarization and comprises a transmitting step of transmitting a modulated signal from the first antenna unit as vertical polarization and transmitting the modulated signal from the second antenna unit as horizontal polarization.

This method transmits vertical polarization and horizontal polarization through a pair of antenna elements provided apart by a predetermined distance, and can thereby make compatible effects of polarized diversity and effects of spatial diversity during transmission.

As is apparent from the above described explanations, the present invention can implement a multi-antenna apparatus, multi-antenna reception method and multi-antenna transmission method capable of making compatible effects of polarized diversity and effects of spatial diversity.

This application is based on the Japanese Patent Application No. 2001-400831 filed on December 28, 2001, entire content of which is expressly incorporated by reference herein.

### Industrial Applicability

The present invention is preferably applicable to a base station apparatus of a mobile communication system, etc.

## Claims

1. A multi-antenna apparatus comprising:
a pair of antenna elements provided apart by a predetermined distance which receive polarizations orthogonal to each other; and
a reception processing section that performs demodulation and combination processing on signals received through said antenna elements.

2. A multi-antenna apparatus comprising:
a pair of antenna elements provided apart by a predetermined distance which transmit polarizations orthogonal to each other; and
a transmission processing section that performs modulation processing on a predetermined signal and then supplies the modulated signal to said antenna elements.

3. A multi-antenna apparatus comprising:
a first antenna unit having antenna elements which receive vertical polarization and horizontal polarization;
a second antenna unit provided apart by a predetermined distance from said first antenna unit having antenna elements which receive vertical polarization and horizontal polarization; and
a reception processing section that applies demodulation and combination processing to the vertical polarization received by said first antenna unit and the horizontal polarization received by said second antenna unit.

4. The multi-antenna apparatus according to claim 3, wherein said first and second antenna unit each include a plurality of said antenna elements, said multi-antenna apparatus further comprising:
a first directional control section that multiplies the plurality of vertical polarizations received by said plurality of antenna elements of said first antenna unit by adaptive weights and then combines said multiplication results to generate a received signal with adaptive directivity;
a second directional control section that multiplies the plurality of horizontal polarizations received by said plurality of antenna elements of said second antenna unit by adaptive weights and then combines said multiplication results to generate a received signal with adaptive directivity; and
a combination section that combines the received signals with adaptive directivity generated by said first and second directional control sections.

5. A multi-antenna apparatus comprising:
a first antenna unit having antenna elements which transmit vertical polarization and horizontal polarization;
a second antenna unit having antenna elements provided apart by a predetermined distance from said first antenna unit which transmit vertical polarization and horizontal polarization;
a first transmission section that transmits a modulated signal from said first antenna unit as vertical polarization; and
a second transmission section that transmits said modulated signal from said second antenna unit as horizontal polarization.

6. A multi-antenna apparatus comprising:
a first antenna unit having a plurality of antenna elements that transmit/receive vertical polarization and horizontal polarization;
a second antenna unit having a plurality of antenna elements provided apart by a predetermined distance from said first antenna unit which receive vertical polarization and horizontal polarization;
a first directional control section that multiplies the plurality of vertical polarizations received by said plurality of antenna elements of said first antenna unit by adaptive weights, then combines said multiplication results to generate a received signal with adaptive directivity;
a second directional control section that multiplies the plurality of horizontal polarizations received by said plurality of antenna elements of said second antenna unit by adaptive weights, then combines said multiplication results to generate a received signal with adaptive directivity;
a combination section that combines the received signals with adaptive directivity generated by said first and second directional control sections;
a first transmission section that transmits the result of a multiplication of the modulated signals by the adaptive weights multiplied on said vertical polarization from said first antenna unit as vertical polarization; and
a second transmission section that transmits the result of a multiplication of the modulated signals by the adaptive weights multiplied on said horizontal polarization from said second antenna unit as horizontal polarization.

7. A multi-antenna apparatus comprising:
a first antenna element group that has at least one pair of antenna elements which receive vertical polarization and horizontal polarization;
a second antenna element group having at least one pair of antenna elements provided apart by a predetermined distance from said first antenna element which receive vertical polarization and horizontal polarization; and
a reception processing section that applies demodulation and combination processing to the vertical polarization received by said first antenna element group and the horizontal polarization received by said second antenna element group.

8. A multi-antenna apparatus comprising:
a first antenna element group that has at least one pair of antenna elements which transmit vertical polarization and horizontal polarization;
a second antenna element group having at least one pair of antenna elements provided apart by a predetermined distance from said first antenna element which transmit vertical polarization and horizontal polarization;
a first transmission section that transmits the modulated signal from said first antenna element group as vertical polarization; and
a second transmission section that transmits said modulated signal from said second antenna element group as horizontal polarization.

9. A multi-antenna apparatus comprising:
a first antenna element group having a plurality of antenna elements which receive vertical polarization and horizontal polarization;
a second antenna element group having a plurality of antenna elements provided apart by a predetermined distance from said first antenna element group which receive vertical polarization and horizontal polarization; and
a reception processing section that applies demodulation and combination processing to the vertical polarizations received by said first antenna element group and the horizontal polarizations received by said second antenna element group.

10. A multi-antenna apparatus comprising:
a first antenna element group having a plurality of antenna elements which transmit vertical polarization and horizontal polarization;
a second antenna element group having a plurality of antenna elements provided apart by a predetermined distance from said first antenna element group which transmit vertical polarization and horizontal polarization;
a first transmission section that transmits a modulated signal from said first antenna element group as vertical polarization; and
a second transmission section that transmits said modulated signal from said second antenna element group as horizontal polarization.

11. A multi-antenna reception method comprising:
a first demodulating step of demodulating vertical polarization received by a first antenna unit having antenna elements which receive vertical polarization and horizontal polarization;
a second demodulating step of demodulating horizontal polarization received by a second antenna unit having antenna elements provided apart by a predetermined distance from said first antenna unit which receive vertical polarization and horizontal polarization; and
a combining step of combining signals demodulated in said first and second demodulating steps.

12. A transmission method for a multi-antenna including a first antenna unit having antenna elements which transmit vertical polarization and horizontal polarization and a second antenna unit having antenna elements provided apart by a predetermined distance from said first antenna unit which transmit vertical polarization and horizontal polarization, comprising:
a transmitting step of transmitting a modulated signal from said first antenna unit as vertical polarization and transmitting the modulated signal from said second antenna unit as horizontal polarization.
